# EUROPÄISCHE PATENTSCHRIFT

(11) **EP 0 425 772 B1**
(45) Veröffentlichungstag und Bekanntmachung des Hinweises auf die Patenterteilung: **22.03.1995**
(21) Anmeldenummer: 90114871.8
(22) Anmeldetag: 02.08.1990
(51) Int. Cl.: B61L 23/00, B61L 3/22, B25J 5/02, B66C 13/46

(54) **Vorrichtung und Verfahren zur Bestimmung eines oder mehrerer Betriebsdaten eines schienengebundenen Fahrzeuges**
Device and method for the determination of one or several operating data of a rail bound vehicle
Dispositif et procédé pour la détermination d'une ou plusieurs données opérationnelles d'un véhicule lié aux rails

(30) Priorität: 01.11.1989 US 430488
(43) Veröffentlichungstag der Anmeldung: 08.05.1991
(73) Patentinhaber: ELECTROMOTIVE SYSTEMS, Inc., Milwaukee, Wisconsin 53213 (US)
(72) Erfinder: Jurkowski, Keith O., Waukesha, WI 53188 (US); Neidinger, Joseph L., Waukesha, WI 53186 (US)
(74) Vertreter: Herrmann-Trentepohl, Werner, Dipl.-Ing.

(56) Entgegenhaltungen:
- FR-A- 2 164 639
- GB-A- 2 204 434
- US-A- 3 964 702
- CONTROL ENGINEERING Bd. 15, Nr. 3, März 1968, NEW YORK US, Seite 54 'Encoded Tracks Tell Train Location'

## Beschreibung

Die Erfindung betrifft ein System zur schienengebundenen Beförderung von Gegenständen mit einem Fahrzeug, insbesondere einen Hängeförderer, und insbesondere ein System, eine Vorrichtung und ein Verfahren zur Bestimmung eines oder mehrerer Betriebsmerkmale des Fahrzeugs bezüglich der Schiene während des Betriebs.

Systeme mit schienengebundenen Fahrzeugen werden in vielen Bereichen der Industrie benutzt. Man verwendet derartige Vorrichtungen in automatisierten Lagerhallen, in Anordnungen zur automatisierten Beförderung und Verteilung von Materialien und in Hallen mit automatisierten Montagefließbändern und Industrierobotern. In Vorrichtungen mit schienengebundenen Fahrzeugen ist es normalerweise wichtig, ein oder mehrere Betriebsmerkmale des Fahrzeugs bezüglich der Schiene zu erkennen. Zum Beispiel ist es wünschenswert, in einer Vorrichtung mit mehreren Fahrzeugen, wie es bei einem Montagefließband oder einer automatisierten Fabrikhalle der Fall ist, den richtigen Abstand zwischen den Fahrzeugen einzuhalten und die Geschwindigkeit der schienengebundenen Fahrzeuge genau zu kontrollieren. Ein anderes Beispiel stellt eine automatisierte Beförderungs- und Lagereinrichtung für Materialien dar. In einer solchen Einrichtung ist es wichtig, Ort und Stellung des schienengebundenens Fahrzeugs genau zu kennen.

Um den richtigen Abstand zwischen den Fahrzeugen einzuhalten, wird bei einem bekannten System, eine Kette oder ähnliches verwendet, und die Fahrzeuge sind in Abständen an der Kette befestigt. Obwohl diese Anordnung die Einhaltung des richtigen Abstandes garantiert, handelt es sich um eine unflexible Vorrichtung. Bei einer derartigen Anordnung ist es beispielsweise nicht möglich, die Geschwindigkeit eines Fahrzeugs zu ändern, ohne die Geschwindigkeit aller Fahrzeuge zu ändern.

In einer aus dem Dokument GB-A-2 204 434 bekannten Vorrichtung benutzt man Strichkodes, die auf der Schiene angeordnet sind und eine Lesevorrichtung, die auf dem Fahrzeug angebracht ist. Eine derartige Einrichtung ist zwar flexibler, ein Lesen des Kodes kann jedoch durch Verschmutzungen und Ablagerungen von fremden Materialien auf der Schiene verhindert werden. Dies führt zu erheblichen Betriebsstörungen.

Aufgabe der Erfindung ist die Weiterbildung derartiger Systeme mit Hinsicht auf einen flexiblen Aufbau mit feinfühlig steuerbarer Betriebsweise zur Behebung der Nachteile des Standes der Technik.

Diese Aufgabe wird für das System, die Vorrichtung und das Verfahren durch die kennzeichnenden Merkmale der entsprechenden Ansprüche gelöst, wobei zweckmäßige Weiterbildungen sich aus den Unteransprüchen ergeben.

Die vorliegende Erfindung ist zur Verwendung in einer elektrischen Förderwagenanlage, mit einem oder mehreren schienengebundenen Fahrzeugen geeignet. Bei einem solchen System ist das Fahrzeug meist mittels einem oder mehreren Rädern bzw. Rollen an der Schiene angeordnet, wobei ein auf dem Fahrzeug befestigter Elektromotor ein oder mehrere Räder antreibt. Eine Stromversorgung ist an der Schiene befestigt, um die Fahrzeuge entlang der Schiene mit Strom zu versorgen. Das Fahrzeug ist mit einer zur Stromversorgung passenden Stromabnehmervorrichtung versehen, welche den Elektromotor mit Strom versorgt, um das Fahrzeug entlang der Schiene zu bewegen.

Gemäß der Erfindung ist eine stationäre magnetische Vorrichtung an der Schiene angebracht, welche mit alternierenden, Magnetisierungsbereichen ausgestattet ist, die so orientiert sind, daß sie nicht parallel zur Bewegungsrichtung des Fahrzeugs liegen. Zwischen zwei alternierenden Bereichen mit magnetischem Fluß, kann bei Bedarf ein Bereich ohne magnetischen Fluß angeordnet werden. Eine Sensorvorrichtung ist an das Fahrzeug angebracht und damit beweglich. Die Sensorvorrichtung erkennt die alternierenden magnetischen Flüsse und Magnetisierungsbereiche, mit welchen die stationäre magnetische Vorrichtung ausgestattet ist. Eine auf einem Sensor ansprechende Vorrichtung ist so beschaffen, daß diese ein oder mehrere Betriebsmerkmale des Fahrzeugs bezüglich der Schiene bestimmen kann.

In einer vorteilhaften Ausgestaltung umfaßt die magnetische Vorrichtung einen sich axial erstreckenden, magnetischen Streifen, der sich entlang der Schiene ausdehnt und an dieser befestigt ist, und dessen alternierende Magnetisierungsbereiche so ausgerichtet sind, daß sie im wesentlichen senkrecht zu der Bewegungsrichtung des schienengebundenen Fahrzeuges stehen.

In einer weiteren vorteilhaften Ausgestaltung wird der Fahrzeugmotor über eine oder mehrere Stromschienen, die an der Schiene befestigt sind, mit Strom versorgt. Ferner liefern die Stromschienen auch Strom für die Steuereinheit des Fahrzeugs und die Erdung für den Fahrzeugmotor.

Der Magnetstreifen ist an einer Stromschiene befestigt, und die Sensorvorrichtung ist an einen Stromabnehmer oder einen Kollektor angebaut, welcher vorteilhafterweise mit der Stromschiene in Eingriff gebracht werden kann, die normalerweise benutzt wird, um den Fahrzeugmotor mit der Masse zu verbinden.

In einer weiteren vorteilhaften Ausgestaltung ist die Stromschiene mit einem entlang ihrer Längsrichtung verlaufenden Kanal ausgestattet, und der Magnetstreifen ist, physikalisch gesehen, in diesen Kanal eingebaut. Auf diese Weise ist der Magnetstreifen verdeckt und keinem Verschleiß ausgesetzt, die alternierenden Magnetisierungsbereiche und Bereiche ohne Magnetisierung hingegen sind über die Stromschiene von der Sensorvorrichtung, die auf dem Stromabnehmer angebracht ist, leicht zu erkennen.

Die Erfindung gibt auch ein Verfahren an, um ein oder mehrere Betriebsmerkmale des Fahrzeugs bezüglich der Schiene zu bestimmen, und welches sich im wesentlichen an die vorhergehende Beschreibung anlehnt.

Nachfolgend wird ein Ausführungsbeispiel der Erfindung anhand der Zeichnung beschrieben. Darin zeigen:
- Fig. 1: eine teilweise perspektivische Ansicht eines auf einer elektrifizierten Schiene montierten Fahrzeugs dar, das einen automatisierten Roboter trägt,
- Fig. 2: eine Draufsicht auf einen Teil der in Fig. 1 abgebildeten Anordnung, die einen Stromabnehmer zeigt, der den Fahrzeugmotor mit Strom von der elektrifizierten Schiene aus versorgt,
- Fig. 3: einen Teil des Schnitts entlang der Gerade 3-3 aus Fig. 2,
- Fig. 4: eine schematische Darstellung des Sensors und der alternierenden magnetischen Pole, die auf dem magnetischen Streifen ausgebildet sind und
- Fig. 5: zeigt eine schematische Darstellung einer auf den Sensor ansprechenden Vorrichtung, mit der ein oder mehrere Betriebsmerkmale des Fahrzeugs bezüglich der Schiene bestimmt werden.

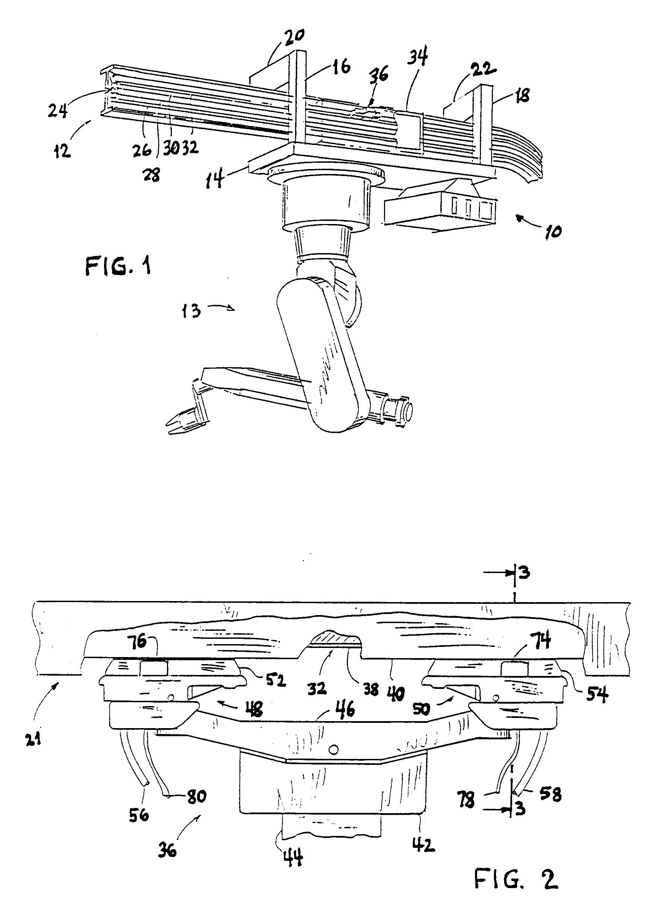

Fig. 1 zeigt eine über Flur angelegte elektrisch betriebene Fördereinrichtung insbesondere in Art einer hängend betriebenen Fördersystems, bei der ein Fahrzeug 10, insbesondere Schlitten, hängend auf einer Schiene 12 angeordnet ist. Das Fahrzeug 10 trägt einen Industrieroboter 13, welcher für die Beschreibung aber unerheblich ist. Ein Fahrzeug 10 und eine Schiene 12 kann im ganz allgemeinen, in jeder Anwendung benutzt werden, die mit der Bewegung eines Gegenstandes von einem Punkt zum anderen auf einen vorbestimmten Weg verbunden ist.

Im allgemeinen beinhaltet das Fahrzeug 10 einen unteren Rahmen 14 mit einem Paar nach oben gerichteten vertikalen Stützelementen 16 und 18. Ein Paar horizontaler Träger 20 und 22 sind mit den vertikalen Stützelementen 16 und 18 verbunden und ein Paar Räder bzw. Rollen (in Fig. 1 nicht gezeigt) sind jeweils an einem der horizontalen Träger 20 und 22 angebracht. Die Räder rollen auf dem oberen Teil der Schiene 12 und gewährleisten somit die Bewegung des Fahrzeugs 10 auf der Schiene 12. Wie ebenfalls bekannt ist, beinhaltet das Fahrzeug 10 einen Elektromotor (in Fig. 1 nicht gezeigt), welcher die Räder auf der Schiene 12 antreibt, um das Fahrzeug 10 zu bewegen.

Zwischen den Flanschen der Schiene 10 ist eine aus mehreren Leitern bestehende elektrische Vorrichtung 24 angebracht. Die elektrische Vorrichtung 24 beinhaltet mehrere Stromschienen, die in Fig. 1 mit 26, 28, 30 und 32 gekennzeichnet sind. Die Stromschienen 26 - 32 liefern den Strom für den Fahrzeugmotor, Kontrollsignale für die Steuereinheit und die Masse für das Fahrzeug. Derartige elektrische Einrichtungen werden beispielsweise unter der Bezeichnung "FABA 100" von der Firma "Electromotive Systems" (Inc. of Milwaukee, Wisconsin) verkauft.

Ein auf das Fahrzeug 10 angebrachtes Gehäuse 34 beinhaltet mehrere Stromschienenkontakte oder Abnehmer, auch Kollektoren genannt, und eine Schnittstelle zu den Stromschienen 26 - 32, welche den Elektromotor des Fahrzeugs mit Strom versorgen. Das Gehäuse 34 beinhaltet ebenfalls mehrere Stromabnehmer 36, die mit dem Elektromotor verdrahtet sind, um die Stromversorgung und die Masseverbindung zu gewährleisten.

Fig. 2 zeigt eine detaillierte Darstellung der Schnittstelle zwischen der elektrischen Vorrichtung 24 und dem Strom- und Signalabnehmer 36. Wie man sieht, besitzt die Stromschiene 32 eine nach außen gerichtete Kontaktfläche 38, welche an und innerhalb einer Plastikschienenhalterung oder Hänger 40 befestigt ist, die gleichzeitig als Schutzvorrichtung dient.

Der Stromabnehmer 36 beinhaltet eine Klammer 42, durch welche der Stromabnehmer 36 über ein Stützelement 44 an das Fahrzeug 10 befestigt ist. Ein Arm 46 ist mit der Klammer 42 verbunden. Jedes Ende des Armes 46 ist mit einem drehbar gelagerten Kontakthalter ausgestattet. Die Kontakthalter 48, 50 sind mit Kontakten 52 bzw. 54 versehen. Die äußeren Kontaktflächen der Kontakte 52 und 54 sind in Eingriff mit der Kontaktfläche 38 der Stromschiene 32, um Strom, Kontrollsignale und Erdungspotential an den Fahrzeugelektromotor und dessen Steuereinheit über die Drähte 56 bzw. 58 zu liefern.

In Fig. 3 sieht man, daß die Kontaktfläche 38 eine nach außen gerichtete Fläche einer äußeren Wand 64 ist, bezüglich der mit Abstand innerhalb eine innere Wand 66 angeordnet ist. Wenn auch die Kontaktfläche 38 als eine nach außen gerichtete vertikale Fläche dargestellt ist, kann die Kontaktfläche der Stromschiene 42 gleicherweise eine nach außen oder nach innen weisende horizontal, oder vertikal oder in sonst einer Weise orientierte Fläche der Schiene 32 sein. Ein paar Seitenwände 68, 70 sind zwischen der äußeren Wand 24 und der inneren Wand 66 angeordnet und begrenzen einen kastenartigen Kanal im Innern der Stromschiene 32. Ein Magnetstreifen 72, dessen Details später erläutert werden, ist innerhalb des von den Wänden 64 - 70 begrenzten Kanals der Stromschiene 32 angebracht. Es hat sich gezeigt, daß eine mit einem Magnetstreifen 72 ausgestattete Schiene, die das Erdungspotential liefert, vorteilhaft ist.

Ferner sieht man in Fig. 3, daß das Kontaktglied 54 mit einem magnetischen Sensor 74 versehen ist. Zwei Sensoren werden verwendet, um Störungen zu vermeiden, die von den Übergängen zwischen den magnetischen Bereichen oder durch den Ausfall einer der Sensoren 74 oder 76 verursacht werden. Selbstverständlich können auch ein, zwei oder mehrere Sensoren verwendet werden. Die Sensoren 74, 76 sind mit Ausgangsdrähten 78 bzw. 80 verbunden. Die Sensoren 74 und 76 können solche sein, wie sie von "Microswitch", eine Tochter der Firma Honeywell unter den Nr. SS21BE oder SS22BE hergestellt werden. Die Sensoren 74, 76 sind mit magnetoresistiven Material ausgestattet, das von Silikon eingehüllt wird und einem Epoxydmantel geschützt wird. Jeder der Sensoren beinhaltet einen integrierten Schaltkreis, der ein dem detektierten Magnetfeld entsprechendes digitales Ausgangssignal ausgibt.

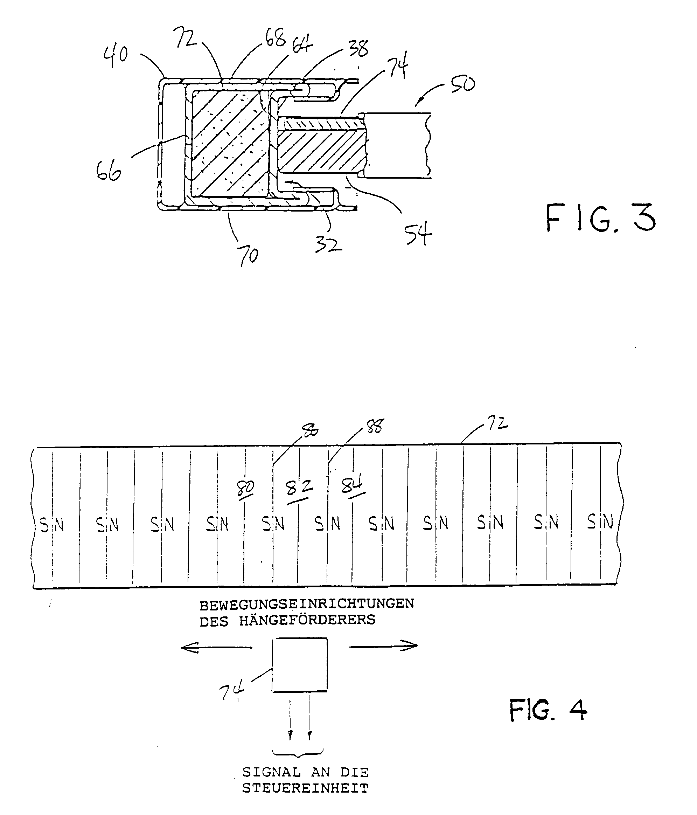

In Fig. 4 sieht man, daß der Magnetstreifen 72 so magnetisiert ist, daß abwechselnd magnetische Nord- und Südpole angeordnet sind und dadurch alternierende Magnetisierungsbereiche bereitgestellt werden. Die folgende Erläuterung bezieht sich auf die Bereiche 80, 82 und 84. Die Linie 86 trennt die Bereiche 80 und 82, und die Linie 88 trennt die Bereiche 82 und 84. Die Linien 86 und 88 stehen senkrecht auf der Bewegungsrichtung des Fahrzeugs 10 entlang der Schiene 12.

Eine andere Möglichkeit besteht darin, einen Magnetstreifen mit Nord- und Südpolen auszustatten, die durch Bereiche ohne magnetischen Fluß getrennt sind.

Während sich das Fahrzeug 10 entlang der Schiene 12 bewegt, erkennen die Sensoren 74 und 76 die alternierenden Magnetisierungsbereiche des Magnetstreifens 72 und öffnen oder schließen einen Schaltkreis in Abhängigkeit davon, ob ein magnetisches Feld vorhanden ist oder nicht. Bereiche ohne magnetischen Fluß sind auf halben Weg zwischen Nord- und Südpol der Bereiche 80, 82 und 84 angeordnet.

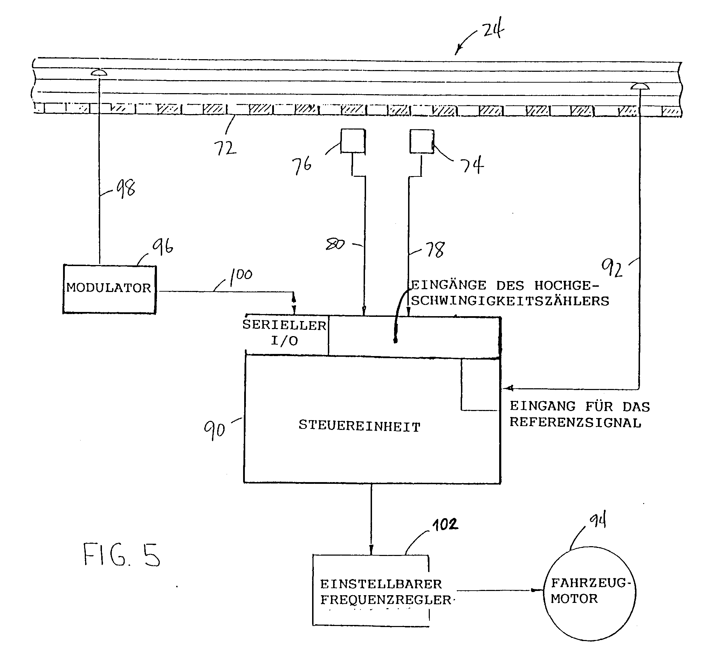

Fig. 5 zeigt eine Steuereinrichtung für das Fahrzeug 10. Die Sensoren 74 und 76 sind über die Drähte 78 und 80 mit einer Steuereinheit 90 verbunden. Die Steuereinheit 90 kann ein Mikroprozessor, programmierbarer Regler oder ein ähnliches Gerät sein. Jeder der Sensoren 74 und 76 liefert ein Eingangssignal an die Steuereinheit 90. Die Steuereinheit 90 empfängt über den Draht 92 ein Eingangssignal von einer der Stromschienen, die ein Referenzsignal bereitstellt. Die von den Stromschienen gelieferten Eingangssignale können Frequenz-, Spannungs-, Stromsignale, oder eine beliebige Kombination derer sein. Falls z. B. eine bestimmte Geschwindigkeit des Fahrzeugs 10 erwünscht ist, wird die Steuereinheit 90 so programmiert, daß das Fahrzeug sich mit einer bestimmten Geschwindigkeit bewegt, wenn ein bestimmtes Referenzeingangssignal von der Stromschiene an die Steuereinheit 90 gesendet wird. Die Steuereinheit 90 verarbeitet die Eingangssignale von den Sensoren 74 und 76, um die Geschwindigkeit des Fahrzeugs 10 und die vom Fahrzeug zurückgelegte Distanz zu bestimmen. Durch einen Geschwindigkeitsregler, wie z.B. ein einstellbarer Frequenzregler 102, erhöht bzw. erniedrigt die Steuereinheit 90 die Geschwindigkeit des Fahrzeugmotors 94, so daß die erwünschte Geschwindigkeit entsprechend dem Referenzeingangssignal erreicht wird.

Ein Modulator 96 oder ein anderes entsprechendes Übertragungsgerät kann benutzt werden, um die Steuereinheit auf den gewünschten Geschwindigkeitswert zu setzen. Der Modulator 96 kann über den Draht 98 mit der elektrischen Vorrichtung 25 und über den Draht 100 mit der Steuereinheit verbunden werden. Übertragungssignale werden über die Stromschienen der elektrischen Vorrichtung 24 zum Modulator 96 gesendet und darüber an die Steuereinheit 90 weitergeleitet, um Befehle zum Setzen der Geschwindigkeit, der zurückzulegenden Distanz und des Bestimmungsortes umzusetzen.

Mit der beschriebenen Vorrichtung ist es möglich, laufend die Geschwindigkeit, den Ort und den zurückgelegten Weg des Fahrzeugs (10) anzuzeigen. In einer automatisierten Einrichtung, bei der mehrere Fahrzeuge verwendet werden, kann die Geschwindigkeit jedes einzelnen Fahrzeugs laufend geändert werden, um vorbestimmte Abstände zwischen den Fahrzeugen einzuhalten. In einer Einrichtung zur Stapelung- und Verteilung von Material kann der genaue Ort eines jeden einzelnen Fahrzeugs laufend überprüft werden. Dies sind nur einige Beispiele für die vielfältigen Anwendungsmöglichkeiten eines solchen Systems.

Eine spezielle Ausführungsform der Erfindung ist bezüglich eines bestimmten Anwendungsfalles beschrieben. Der Magnetstreifen könnte aber auf verschiedene Weise an die Schiene befestigt werden. Der Magnetstreifen kann an der Schiene haften, beispielsweise durch einen Klebstoff, oder an jener angeschraubt sein, aber kann auch an einem anderen Teil des Aufbaus befestigt sein und braucht nicht unbedingt an der Schiene angebracht zu werden. Außerdem könnte man die Schiene 12 auch in die Vertikalebene legen oder in eine zur Horizontalebene geneigten Ebene. Dementspechend würde die Bewegung des Fahrzeugs (10) eine vertikale Komponente aufweisen, und das Fahrzeug könnte auch eine Aufwärts- bzw. Abwärtsbewegung ausführen.

## Patentansprüche

1. System zur Bewegung eines Gegenstandes, mit
- einem Fahrzeug, das den Gegenstand trägt;
- einer Schiene, die das Fahrzeug trägt und auf der das Fahrzeug bewegbar ist;
- einer Vorrichtung zur Bewegung des Fahrzeugs auf der Schiene;
gekennzeichnet durch:
- eine auf der Schiene montierten stationären magnetischen Vorrichtung, welche mit alternierenden Magnetisierungsbereichen ausgestattet ist, deren magnetischer Fluß nicht parallel zur Bewegungsrichtung des schienengebundenen Fahrzeugs ausgerichtet ist;
- eine an dem Fahrzeug angeordneten und mit diesem beweglichen Sensorvorrichtung zur Erfassung der alternierenden Bereiche des magnetischen Flusses der magnetischen Vorrichtung; und
- eine Vorrichtung, die auf die Sensorvorrichtung anspricht, um die Betriebsmerkmale des Fahrzeugs bezüglich der Schiene zu bestimmen.

2. System nach Anspruch 1, **dadurch gekennzeichnet**, daß die stationäre magnetische Vorrichtung derart magnetisiert ist, daß sie abwechselnd Bereiche mit und ohne magnetischem Fluß aufweist.

3. System nach Anspruch 1, **dadurch gekennzeichnet**, daß die alternierenden Magnetisierungsbereiche der magnetischen Vorrichtung im wesentlichen senkrecht zur Bewegungsrichtung des Fahrzeuges auf der Schiene ausgerichtet sind.

4. System nach Anspruch 1, **dadurch gekennzeichnet**, daß die magnetische Vorrichtung einen sich axial erstreckenden Magnetstreifen aufweist, welcher an der Schiene befestigt ist und sich entlang dieser erstreckt.

5. System nach Anspruch 4, **dadurch gekennzeichnet**, daß die Vorrichtung zur Bewegung des Fahrzeugs auf der Schiene einen auf dem Fahrzeug angebrachten Elektromotor, eine Stromschienenanordnung, die an der Schiene befestigt ist, und Stromabnehmer zur Versorgung des Elektromotors mit Strom, zur Übertragung von Steuersignalen an die Fahrzeug-Steuereinheit und zur Verbindung des Fahrzeuges mit der Masse aufweist.

6. System nach Anspruch 5, **dadurch gekennzeichnet**, daß die Stromschienenanordnung eine Stromschiene an der Schiene aufweist, auf der der magnetische Streifen angeordnet ist, wobei die Sensorvorrichtung an dem Stromabnehmer angeordnet ist.

7. System nach Anspruch 6, **dadurch gekennzeichnet**, daß die Stromschiene einen entlang der Längsachse angeordneten axialen Kanal aufweist, wobei der Magnetstreifen innerhalb des Kanals angeordnet ist.

8. System nach Anspruch 1, **dadurch gekennzeichnet**, daß die Sensorvorrichtung Signale ausgibt in Reaktion auf die Magnetisierungsbereiche der stationären magnetischen Vorrichtung, und daß die auf den Sensor ansprechende Vorrichtung Signale empfängt, welche die Sensorvorrichtung abgibt, um ein oder mehrere Betriebsmerkmale des Fahrzeugs bezüglich der Schiene zu bestimmen.

9. System nach Anspruch 8, **dadurch gekennzeichnet**, daß die auf den Sensor ansprechende Vorrichtung eine Steuereinheit beinhaltet, die betriebsseitig zwischen der Sensoreinrichtung und der Vorrichtung zu Bewegung des Fahrzeugs entlang der Schiene angeordnet ist, um die Betriebsgeschwindigkeit des Fahrzeugs auf der Schiene in Abhängigkeit von ein oder mehreren Betriebsmerkmalen zu steuern.

10. Vorrichtung zur Bestimmung eines oder mehrerer Betriebsmerkmalen eines Fahrzeugs bezüglich einer Schiene für ein System zur Beförderung von Gegenstände mit einem Fahrzeug, einer Schiene, die das Fahrzeug trägt und auf der das Fahrzeug beweglich ist, und einer Vorrichtung für die Bewegung des Fahrzeugs auf der Schiene, **gekennzeichnet durch**
eine an der Schiene befestigte stationäre magnetische Vorrichtung mit alternierenden Magnetisierungsbereichen, die nicht parallel zur Richtung der Bewegung des Fahrzeugs auf der Schiene ausgerichtet sind,
eine Sensorvorrichtung, die am Fahrzeug befestigt ist und damit bewegt werden kann und die die alternierenden Magnetisierungsbereiche der magnetischen Vorrichtung erkennt und eine auf den Sensor ansprechende Vorrichtung, um einen oder mehrere Betriebsmerkmale des Fahrzeugs bezüglich der Schiene zu bestimmen.

11. Verfahren zur Bestimmung von einem oder mehreren Betriebsmerkmalen eines Fahrzeugs bezüglich einer Schiene bei einem System zur Beförderung von Gegenstände mit einem Fahrzeug, einer Schiene, die das Fahrzeug trägt und auf der das Fahrzeug beweglich ist, und einer Vorrichtung für die Bewegung des Fahrzeugs auf der Schiene, gekennzeichnet durch Schritte des
- Bereitstellens eines magnetisierbaren Elementes,
- Magnetisierens des magnetisierbaren Elements, um alternierende Magnetisierungsbereiche anzuordnen,
- Anordnens des magnetisierbaren Elementes an der Schiene, so daß das magnetische Bauteil bezüglich der Schiene in einem stationären Zustand gehalten wird und die alternierenden Magnetisierungsbereiche so ausgerichtet sind, daß sie nicht parallel zur Bewegungsrichtung des Fahrzeugs auf der Schiene liegen,
- Bereitstellens eines Sensors,
- Anordnens des Sensors am Fahrzeug, so daß der Sensor die alternierenden Magnetisierungsbereiche auf dem magnetisierbaren Bauteil erkennt, während sich das Fahrzeug auf der Schiene bewegt, ein dem Magnetierungsbereich entsprechendes Signal ausgibt, und
- Bestimmens eines oder mehrerer Betriebsmerkmale des Fahrzeugs bezüglich der Schiene aus den vom Sensor ausgegebenen Signalen.

## Claims

1. A system for moving an article, comprising:
a vehicle for carrying said article;
rail means for supporting said vehicle and on which said vehicle is movable;
means for moving said vehicle on said rail means; characterized by
stationary magnetic means mounted to said rail means, said magnetic means being provided with alternating flux regions oriented non-parallel to the direction of movement of said vehicle on said rail means;
sensor means mounted to and movable with said vehicle, said sensor means acting to sense the alternating flux regions provided on said magnetic means; and
means responsive to said sensor means for determining one or more operating characteristics of said vehicle relative to said rail means.

2. The system of claim 1, characterized in that said stationary magnetic means is magnetized so as to include regions of alternating flux and no-flux.

3. The system of claim 1, characterized in that the alternating flux regions provided on said magnetic means are oriented substantially perpendicular to the direction of movement of said vehicle on said rail means.

4. The system of claim 1, characterized in that said magnetic means comprises an axially extending magnetic strip mounted to and extending along said rail means.

5. The system of claim 4, characterized in that said means for moving said vehicle on said rail means comprises an electric motor mounted to said vehicle, power supply conductor bar means mounted to said rail means, and pickup means for transferring power from said power supply means to said electric motor, controls signals to the vehicle controller and ground potential to the vehicle.

6. The system of claim 5, characterized in that said power supply conductor bar means comprises a conductor bar mounted to said rail means, and said magnetic strip is mounted to said conductor bar and said sensor means is mounted to said pickup.

7. The system of claim 6, characterized in that said conductor bar includes an axial passage along its length, and said magnetic strip is placed within said passage.

8. The system of claim 1, characterized in that said sensor means outputs a signal responsive to the alternating flux regions provided on said magnetic means, and said means responsive to said sensor means receives signals output by said sensor means for determining one or more operating characteristics of said vehicle relative to said rail means.

9. The system of claim 8, characterized in that said means responsive to said sensor means comprises controller means operatively disposed between said sensor means and said means for moving said vehicle on said rail means, for controlling the speed of operation of said vehicle on said rail means in response to the determination of said one or more operating characteristics.

10. A device for determining one or more operating characteristics of a vehicle relative to rail means for an article moving system including a vehicle, rail means for supporting the vehicle and on which the vehicle is movable, and means for moving the vehicle on the rail means characterized by stationary magnetic means mounted to said rail means, said magnetic means being provided with alternating flux regions oriented non-parallel to the direction of movement of said vehicle on said rail means;
sensor means mounted to and movable with said vehicle, said sensor means acting to sense the alternating flux regions provided on said magnetic means; and
means responsive to said sensor means for determining one or more operating characteristics of said vehicle relative to said rail means.

11. A process of determining one or more operating characterized of a vehicle relative to rail means for an article moving system including a vehicle, rail means for supporting the vehicle and on which the vehicle is movable, and means for moving the vehicle on the rail means characterized by the steps of:
providing a magnetizable member;
magnetizing said magnetizable member so as to provide alternating flux regions;
mounting said magnetizable member to said rail means such that said magnetizable member is maintained stationary relative to said rail means and said alternating flux regions are oriented non-parallel to the direction of movement of said vehicle on said rail means;
providing a sensor;
mounting said sensor to said vehicle such that said sensor is capable of sensing the alternating flux regions on said magnetizable member as said vehicle moves on said rail means and outputs a signal in response thereto; and
determining, from the signal output by said sensor, one or more operating characteristics of said vehicle relative to said rail means.

## Revendications

1. Système de déplacement d'un objet, avec un véhicule qui supporte l'objet, un rail qui supporte le véhicule et sur lequel le véhicule peut être mû, un dispositif de déplacement du véhicule sur le rail, caractérisé par un dispositif magnétique stationnaire, monté sur le rail et qui est équipé de zones de magnétisation alternantes dont le flux magnétique est aligné de façon non parallèle au sens de mouvement du véhicule lié au rail, par un dispositif capteur disposé sur le véhicule, mobile avec celui-ci et destiné à détecter les zones alternantes du flux magnétique du dispositif magnétique et par un dispositif qui répond au dispositif capteur pour déterminer les caractéristiques opérationnelles du véhicule par rapport au rail.

2. Système selon la revendication 1, caractérisé en ce que le dispositif magnétique stationnaire est magnétisé de manière à présenter de façon alternative des zones avec et sans flux magnétique.

3. Système selon la revendication 1, caractérisé en ce que les zones de magnétisation alternantes du dispositif magnétique sont alignées essentiellement perpendiculairement au sens de mouvement du véhicule sur le rail.

4. Système selon la revendication 1, caractérisé en ce que le dispositif magnétique présente une piste magnétique s'étendant axialement, qui est fixée au rail et s'étend le long de celui-ci.

5. Système selon la revendication 4, caractérisé en ce que le dispositif de déplacement du véhicule sur le rail présente un moteur électrique installé sur le véhicule, une disposition de rail conducteur qui est fixée au rail, et un récepteur de courant pour l'alimentation du moteur électrique en courant, pour la transmission de signaux de commande à l'organe de commande du véhicule et pour connecter celui-ci à la masse.

6. Système selon la revendication 5, caractérisé en ce que la disposition de rail conducteur présente un rail conducteur sur le rail sur lequel se trouve la piste magnétique, le dispositif capteur étant disposé sur le récepteur de courant.

7. Système selon la revendication 6, caractérisé en ce que le rail conducteur présente un canal axial disposé le long de l'axe longitudinal, la piste magnétique étant disposée à l'intérieur du canal.

8. Système selon revendication 1, caractérisé en ce que le dispositif capteur émet des signaux en réaction aux zones de magnétisation du dispositif magnétique stationnaire et en ce que le dispositif sensible au capteur reçoit des signaux que délivre le dispositif capteur pour déterminer une ou plusieurs caractéristiques opérationnelles du véhicule par rapport au rail.

9. Système selon la revendication 8, caractérisé en ce que le dispositif sensible au capteur renferme un organe de commande qui est disposé, du côté opérationnel, entre le dispositif capteur et le dispositif de déplacement du véhicule le long du rail pour commander la vitesse de fonctionnement du véhicule sur le rail, en fonction d'une ou de plusieurs caractéristiques opérationnelles.

10. Dispositif pour la détermination d'une ou plusieurs données opérationnelles d'un véhicule par rapport à un rail pour un système de transport d'objets, muni d'un véhicule, d'un rail qui supporte le véhicule et sur lequel celui-ci est mobile ainsi que d'un dispositif pour le déplacement du véhicule sur le rail, caractérisé par un dispositif magnétique stationnaire fixé au rail, avec des zones de magnétisation alternantes qui sont alignées de façon non parallèle au sens de mouvement du véhicule sur le rail, par un dispositif capteur qui est fixé au véhicule et peut donc être mû et qui reconnaît les zones de magnétisation alternantes du dispositif magnétique et par un dispositif sensible au capteur, pour déterminer une ou plusieurs caractéristiques opérationnelles du véhicule par rapport au rail.

11. Procédé pour la détermination d'une ou plusieurs caractéristiques opérationnelles d'un véhicule par rapport au rail, pour un système de transport d'objets, avec un véhicule, un rail qui supporte le véhicule et sur lequel celui-ci est mobile, ainsi qu'un dispositif pour le déplacement du véhicule sur le rail, caractérisé par des étapes de mise à disponibilité d'un élément magnétisable, de magnétisation de l'élément magnétisable pour disposer des zones de magnétisation alternantes, de disposition de l'élément magnétisable sur le rail, de sorte que le composant magnétique est maintenu dans un état stationnaire par rapport au rail et que les zones de magnétisation alternantes sont alignées de façon à ne pas être parallèles au sens de mouvement du véhicule, de mise à disponibilité d'un capteur, de disposition du capteur sur le véhicule, de façon à ce que le capteur reconnaisse les zones de magnétisation alternantes sur le composant magnétisable tandis que le véhicule se déplace sur le rail, à ce qu'il émette un signal correspondant à la zone de magnétisation, et de détermination d'une ou plusieurs caractéristiques du véhicule par rapport au rail, à partir des signaux émis par le capteur.
